# EUROPEAN PATENT APPLICATION

(11) **EP 4 793 842 A1**
(43) Date of publication of application: **19.08.2026**
(21) Application number: 23955467.8
(22) Date of filing: 12.10.2023
(51) Int. Cl.: G06N 20/00

(54) **MACHINE-LEARNING PROGRAM, MACHINE-LEARNING METHOD, AND MACHINE-LEARNING DEVICE**

(71) Applicant: FUJITSU LIMITED, Kawasaki-shi, Kanagawa 211-8588 (JP)
(72) Inventor: NISHIKINO, Keizaburo, Kawasaki-shi, Kanagawa 211-8588 (JP)
(74) Representative: Hoffmann Eitle
(86) International application number: PCT/JP2023/037113
(87) International publication number: WO 2025/079219

(57) **Abstract**

A process of estimating a first intensity estimation value that indicates an intensity of a data change in data after change by using an intensity estimation unit (12) that is intensity estimation AI, a process of performing a first update, using an intensity adjustment learning device (14), a learning device (10) such that the data change of the intensity indicated by the first intensity estimation value is added to data before change, a process of generating post-change data by adding the data change to the data before change by using the learning device (10) that has been subjected to the first update, a process of estimating a second intensity estimation value that indicates the intensity of the data change in the post-change data by using the intensity estimation unit (12) that is the intensity estimation AI, a process of comparing the first intensity estimation value with the second intensity estimation value, and a process of causing the intensity adjustment learning device (14) to perform first learning such that the second intensity estimation value approaches the first intensity estimation value are caused to be executed by a computer.

## Description

### Field

The present invention relates to a machine learning program, a machine learning method, and a machine learning device.

### Background

In recent years, Artificial Intelligence (AI) is widely utilized as a tool for solving various kinds of problems in all fields. With the advancement of this kind of AI, an improvement of awareness of ethical problems including equitability has been recognized as an important issue in the field of AI.

For example, in the European Union (EU), an AI regulation bill, such as the AI Act, has been proposed with the aim of protecting the privacy of a user, a voting right, a copyrighted material, or the like, and attempts are being made to address the ethical problems of AI from a legal or social standpoint. Furthermore, as a factor of raising awareness of ethical problems in AI, a damage to image of a for-profit corporation caused by ethical problems in AI, a loss of profits due to breaches of equitability may be included.

As one of this kind of ethical problem in AI, degradation of equitability in AI in operation is present. The degradation of equitability in AI in operation indicates that equitability at the time of estimation is degraded due to a change in data that corresponds to an estimation target during operation. The change in data corresponding to the estimation target is referred to as a data shift.

As one example, a data shift that occurs in AI for detecting a suspicious individual at an airport will be described. For example, in a case where a training of AI is performed by using learning data with a high proportion of North American passengers, estimation accuracy of the subject AI with respect to North American men and women becomes high. However, if the AI that has been trained in this way is used in an environment with a high proportion of Asian passengers, estimation accuracy with respect to a specific attribute decreases, that is, for example, estimation accuracy related to women decreases, or the like equitability of the AI may become degraded. Furthermore, other than the case where the data shift occurs between learning data and operational data, a data shift may occur due to a variation in race and gender ratio of passengers in accordance with regions and seasons. For example, it is conceivable that a temporal variation may occur due to differences in vacation periods for each country or a spatial variation may occur due to differences in the nationality and gender of frequent visitors in each region to be estimated. Even under such circumstances, there is a risk that equitability in AI may become degraded.

The data shift is classified into two types, generally referred to as a data drift and a concept shift. The data drift is a change in data resulting from a change in trend of data or a change in state of data. As example of the change in the trend of data includes a case of a change from North American passengers to the Asian passengers as described above, or a case in which a video image quality is poor due to an increase in blurring during image capturing. Furthermore, an example of the change in the state of data includes a case in which an estimation target is changed from a photograph to an illustration, such as a comic. The concept shift is a change in data due to a change in relationship between data and a label.

Here, the result obtained by verifying the equitability of estimation accuracy across men and women on the basis of the intensity of the data drift will be described. The public data set that has been used by this verification is CelebFaces Attributes (CelebA), and the machine learning model that has been used is Residual Network (ResNet) 18. Furthermore, the estimation performed by the machine learning model, 4-class classification constituted of a smiling face, a man, and a woman, and also, the number of pieces of training data is 9460 sets, and the number of pieces of verification data is 4056 sets. Under this condition, when an estimation is performed by changing the intensity of the data drift, in a case where the intensity of the data drift is high, the estimation accuracy of non-smiling and women increases and this results in a difference in accuracy between men and women. In other words, from this verification result, it is conceivable that a collapse of the equitability of AI in operation due to the occurrence of the data drift occurs. Here, the intensity of the data drift indicates the magnitude of a change in data, and it can be described as the degree of data drift indicating how much change in data has occurred.

As a technology with respect to this kind of change in data, there is a proposed technology for generating a robust machine learning model with respect to operational data by performing a training by using the training data that has been subjected to a style conversion to correspond to the operational data. The style mentioned here corresponds to a feature value representing attribute information, or the like that is related to an object captured in an image in a case where the image is used as an estimation target. In addition, the style conversion mentioned here is a process of causing an image to be changed by adding random noise to a feature value of the image.

As the technology for performing the style conversion, there is a technology for generating an image that is obtained by converting the style by using a machine learning model in which image conversion between pairs of data sets has been trained. Furthermore, there is a technology for generating an image obtained by converting a style by causing a technology machine learning model to specifying the style. Furthermore, there is a technology for generating an image obtained by converting a style by using a machine learning model that has been trained by using supervised data including the original image, converted image, and a condition value.

In addition to those described above, there is also a technology described below as the technology with respect to a change in data. There is a proposed technology for performing inference by creating a plurality of pieces of state change data in a plurality of other states by converting the original data having a state label corresponding to predetermined state information by using a neural network, and checking the state change data against input data. Furthermore, there is a proposed technology for performing determination related to an examination item by removing noise included in an image to be examined on the basis of image conversion, creating a measurement result from the image to be examined from which the noise has been removed, and by comparing the measurement result with the criterion of the determination. Furthermore, there is a proposed technology for predicting texture information on a surface of a face after aging over time from two-dimensional face image data by using a machine learning model that has been trained by using teacher data including a two-dimensional face image data set obtained before and after time elapses. Furthermore, there is a proposed technology for performing re- configuration of an image by using and autoencoder, deciding an outlier and a data drift by using re-configuration error of the image that has been generated on the basis of a similarity, and updating a machine learning model by using the decided outlier and the decided data drift. Furthermore, there is a proposed technology for generating an image obtained by reducing its size by using a machine learning model having a neural network that estimates segmentation of the image.

### Citation List

### Patent Literature

Patent Literature 1: International Publication Pamphlet No. WO 2006/030687
Patent Literature 2: Japanese Laid-open Patent Publication No. 2022-87930
Patent Literature 3: Japanese Laid-open Patent Publication No. 2022-24564
Patent Literature 4: U.S. Patent Application Publication No. 2022/0215289
Patent Literature 5: U.S. Patent Application Publication No. 2022/0335253

### Summary

### Technical Problem

However, in the technology for training image conversion between the pairs of data sets, a verification of estimation accuracy is performed on the basis of a fixed relationship between the pairs of the data sets, so that it is difficult to perform a retraining performed in a case where the intensity of the data drift continuously changes. Furthermore, in the technology for generating the image by converting the specified style, it is difficult to perform a training of the relationship between the style variable that defines the effects of style conversion and the data drift. As a result of this, it is difficult to perform the training of the style variable conforming to the change in intensity of the data drift, and, in addition, the style variable itself does not receive a training of the difference in the data drift, so that it is difficult to train the machine learning model by using the image that has been subjected to the style conversion by using this method. Furthermore, in the technology for performing the training by using the supervised data including the image, the converted image, and the condition value, it is difficult to perform the training by using the pair of the image in which the condition value is excluded and the converted image. As a result of this, it is difficult to automatically generate a data set that is used for the training, and it is thus difficult to automatically perform the retraining of the machine learning model. In this way, regardless of which image conversion technology is used, it is difficult to cause the machine learning model to perform the retraining that accounts for the data drift, it is difficult to guarantee the equitability or the like of the estimation result, and it is difficult to reduce the degradation of the estimation accuracy.

Furthermore, in also the technology with respect to the other change in data, the retraining for coping with the data drift is not considered. As a result of this, it is difficult to cause the machine learning model to perform the retraining that accounts for the data drift even if these technologies are used, and it is thus difficult to reduce the degradation of the estimation accuracy.

Accordingly, the disclosed technology has been conceived in light of the circumstances described above and an object thereof is to provide a machine learning program, a machine learning method, and a machine learning device that reduces degradation of estimation accuracy.

### Solution to Problem

The machine learning program, the machine learning method, and the machine learning device disclosed in this application causes, in one aspect, a computer to execute a process including, estimating a first intensity estimation value that indicates an intensity of a data change in data after change by using intensity estimation AI, performing a first update, by using an intensity adjustment learning device, on a learning device such that the data change of the intensity indicated by the first intensity estimation value is added to data before change, generating post-change data by adding the data change to the data before change by using the learning device that has been subjected to the first update, estimating a second intensity estimation value that indicates the intensity of the data change in the post-change data by using the intensity estimation AI; and comparing the first intensity estimation value with the second intensity estimation value, and causing the intensity adjustment learning device to perform first learning such that the second intensity estimation value approaches the first intensity estimation value.

### Advantageous Effects of Invention

According to an aspect of an embodiment of a machine learning program, a machine learning method, and a machine learning device disclosed in the present application, it is possible to reduce degradation of estimation accuracy.

### Brief Description of Drawings

FIG. 1 is a block diagram illustrating a machine learning device according to an embodiment.
FIG. 2 is a diagram illustrating an outline of image conversion performed on the basis of a machine learning model included in a learning device.
FIG. 3 is a diagram illustrating a process of generating a post-data drift image performed by the machine learning device according to the embodiment.
FIG. 4 is a flowchart illustrating the flow of a machine learning process for the image conversion performed in the machine learning device according to the embodiment.
FIG. 5 is a diagram illustrating a comparison of validity accuracy of class classification.
FIG. 6 is a diagram illustrating an identification frequency of the class classification.
FIG. 7 is a diagram illustrating a hardware configuration of the machine learning device.

### Description of Embodiment

Hereinafter, embodiment of a machine learning program, a machine learning method, and a machine learning device disclosed in the present application will be described in detail below with reference to the accompanying drawings. Furthermore, the machine learning program, the machine learning method, and the machine learning device disclosed in the present application are not limited by the embodiment described below.

### (Embodiment)

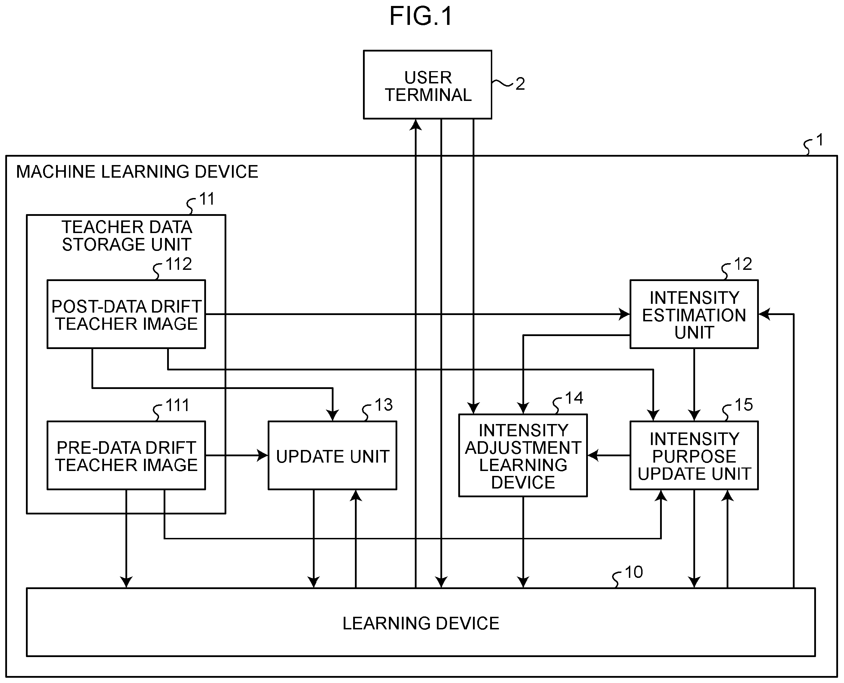

FIG. 1 is a block diagram illustrating a machine learning device according to the embodiment. In the following, a machine learning device 1 according to the embodiment will be described with reference to FIG. 1. In the following, a data drift related to image data will be described as an example of a data change that reduces estimation accuracy, but, as for the other data changes, the machine learning device 1 is able to perform the same process in the same manner as long as continuous changes are present, and also, the data change is able to be reproduced.

The machine learning device 1 includes, as illustrated in FIG. 1, a learning device 10, a teacher data storage unit 11, an intensity estimation unit 12, an update unit 13, an intensity adjustment learning device 14, and an intensity purpose update unit 15. The operation of the machine learning device 1 is constituted of a learning phase and an estimation phase. In the learning phase, the machine learning device 1 performs a training of both of the learning device 10 and the intensity adjustment learning device 14, and generates the trained learning device 10 and the trained intensity adjustment learning device 14. Furthermore, in the estimation phase, the machine learning device 1 uses the trained learning device 10 and the trained intensity adjustment learning device 14, and generates an image data after a data drift by adding a data drift of the intensity designated with respect to the input image data.

The teacher data storage unit 11 stores therein a data set of teacher data that is used to train both of the learning device 10 and the intensity adjustment learning device 14. Specifically, the teacher data storage unit 11 holds a pre-data drift teacher image 111 and a post-data drift teacher image 112.

The pre-data drift teacher image 111 is standard training data, and is image data for the purpose of a training of the machine learning model that is used to perform image recognition. The teacher data storage unit 11 holds a large number of the pre-data drift teacher images 111 as data sets.

The post-data drift teacher image 112 is image data in which a data drift has occurred. In a case where the post-data drift teacher image 112 is the image data in which a data drift has occurred, a target object captured in the subject image may be different from the target object included in the pre-data drift teacher image 111. The teacher data storage unit 11 holds a large number of the post-data drift teacher images 112 as data sets.

For example, both of a case in which a machine learning model that is used to classify human faces into several classes is trained and a case in which blurring at the time of image capturing occurs as a data drift are considered. In these cases, the pre-data drift teacher image 111 is able to use an image of, for example, a face of a man indicated by A with no blurring. On the other hand, the post-data drift teacher image 112 may be the image of the face indicated by A or may be an image of a face of a person other than the man indicated by A as long as blurring occurs in the image. For example, the post-data drift teacher image 112 is able to use an image that is related to a person of a woman indicated by B and in which blurring has occurred.

The intensity estimation unit 12 is data drift intensity estimation AI that estimates the intensity of a data drift that has been added to the image. The intensity estimation unit 12 has a class identifier that is the machine learning model that performs class classification of the input image data. The class identifier is a trained fixed network that has already been subjected to a training of the class classification by using the image data before the data drift.

The intensity estimation unit 12 performs, in the learning phase, the following process on the acquired image data. The intensity estimation unit 12 inputs the acquired image data to the class identification device that is included by the intensity estimation unit 12, and acquires the degree of confidence with respect to the input image data as an output from the class identifier. Then, the intensity estimation unit 12 calculates entropy of the image data by using the acquired degree of confidence. The entropy is also referred to as the degree of disorder, and is a value that indicates how far away the identified class is. In other words, entropy increases as a data drift increases. However, in the present embodiment, the entropy has been used as an index representing the intensity of the data drift, but the index that is able to be used is not limited to this. It is also possible to different information as long as the information has a predetermined correlation with the intensity of the data drift.

The intensity estimation unit 12 acquires the post-data drift teacher image 112 from the teacher data storage unit 11. Then, the intensity estimation unit 12 inputs the acquired post-data drift teacher image 112 to the class identification device that is held by the intensity estimation unit 12 by itself, and acquires the degree of confidence with respect to the post-data drift teacher image 112 as an output from the class identifier. Then, the intensity estimation unit 12 calculates the entropy of the post-data drift teacher image 112 from the degree of confidence. In a description below, the entropy of the post-data drift teacher image 112 is referred to as a "reference intensity value". The intensity estimation unit 12 outputs the calculated reference intensity value to the intensity adjustment learning device 14. This reference intensity value corresponds to one example of a "first intensity estimation value". Furthermore, the post-data drift teacher image 112 corresponds to a "data after change".

After that, the intensity estimation unit 12 acquires the post-data drift image that has been generated from the pre-data drift teacher image 111 in accordance with the reference intensity value by using the learning device 10 in which the intensity of the data drift has been adjusted by the intensity adjustment learning device 14. Then, the intensity estimation unit 12 inputs the acquired post-data drift image to the class identification device that is possessed by the intensity estimation unit 12 by itself, and acquires the degree of confidence with respect to the post-data drift image as an output from the class identifier. Then, the intensity estimation unit 12 calculates the entropy of the post-data drift image from the acquired degree of confidence. In a description below, the entropy of the post-data drift image is referred to as a "comparative intensity value". The intensity estimation unit 12 outputs the calculated reference intensity value and the calculated comparative intensity value to the intensity purpose update unit 15.

The comparative intensity value corresponds to one example of a "second intensity value". Furthermore, the pre-data drift teacher image 111 corresponds to one example of a "data before change", and the post-data drift image corresponds to one example of "post-change data". In other words, the intensity estimation unit 12 estimates the first intensity estimation value that indicates the intensity of the data drift occurring in the post-data drift teacher image 112, and also, estimates the second intensity estimation value that indicates the intensity of the data drift occurring in the post-data drift image that has been generated by inputting the pre-data drift teacher image 111 to the learning device 10 in which the first update has been performed on the basis of the first intensity estimation value.

The intensity purpose update unit 15 performs the following process in the learning phase. The intensity purpose update unit 15 receives an input of each of the reference intensity value and the comparative intensity value from the intensity estimation unit 12. Then, the intensity purpose update unit 15 updates the parameter of each of the learning device 10 and the intensity adjustment learning device 14 such that an error between the reference intensity value and the comparative intensity value is minimized. In other words, the intensity purpose update unit 15 compares the first intensity estimation value with the second intensity estimation value, and causes the intensity adjustment learning device 14 to perform the first learning such that the second intensity estimation value approaches the first intensity estimation value.

In a case where the training using the reference intensity value and the comparative intensity value described above is not performed, when a post-data drift image is generated by using the learning device 10 and the intensity adjustment learning device 14, there is no guarantee that the designated intensity value matches the intensity value of the data drift in the post-data drift image that is to be output. As a result of this, the intensity value that is obtained from the post-data drift image to be generated at the time at which an intensity value that is different from the reference intensity value is designated consequently becomes meaningless information with respect to the designated intensity value. On the other hand, the machine learning device 1 according to the present embodiment performs a training of each of the learning device 10 and the intensity adjustment learning device 14 by using the intensity purpose update unit 15. As a result of this, the machine learning device 1 according to the present embodiment is able to allow the designated intensity value to match the intensity value of the generated post-data drift image even when the intensity value that is different from the reference intensity value is designated at the time at which the post-data drift image is generated. As a result of this, the machine learning device 1 according to the present embodiment is able to make the intensity value of the post-data drift image a meaningful intensity value that correlates with the designated intensity value, and is able to generate the intensity value, and a pair of the input image before conversion and the post-data drift image in a meaningful manner.

The intensity adjustment learning device 14 performs the following process in the learning phase. The intensity adjustment learning device 14 receives an input of the reference intensity value from the intensity estimation unit 12. Then, the intensity adjustment learning device 14 updates various kinds of parameters that have been set in the learning device 10, and adjusts the intensity value of the data drift that is added to the original image data at the time at which the post-data drift image is generated.

After that, the intensity adjustment learning device 14 receives, from the intensity purpose update unit 15, an update of the parameter in which an error between the reference intensity value and the comparative intensity value is minimized. As a result of this, the intensity adjustment learning device 14 completes the learning that is performed in order to perform parameter adjustment that corresponds to the designated intensity value on the learning device 10. Then, the intensity adjustment learning device 14 performs an adjustment of the intensity value of the data drift that is added to the original image data at the time at which the post-data drift image is generated by using the parameter that has been updated such that the error between the reference intensity value and the comparative intensity value is minimized. In other words, the intensity adjustment learning device 14 performs the first update on the learning device 10 that generates new data by adding a predetermined data change to the input data such that the learning device 10 adds the data drift of the intensity that is indicated by the first intensity estimation value as a predetermined change.

Furthermore, the intensity adjustment learning device 14 performs the following process in the estimation phase. The intensity adjustment learning device 14 receives an input of the intensity value of the data drift desired by the user from a user terminal 2. Then, the intensity adjustment learning device 14 adjusts the learning device 10 such that the data drift of the designated intensity is added to the original image data.

Here, in the present embodiment, the case in which the user designates the intensity value of the data drift has been described, but it is conceivable that it is difficult for the user to handle the intensity value of the data drift. Accordingly, the user may designate the image data in which the data drift of a desired intensity has been added, instead of designating the intensity value. In this case, the intensity estimation unit 12 receives the designated image data from the user terminal 2 and estimates the intensity value of the data drift occurring in the received image. The intensity adjustment learning device 14 adjusts the learning device 10 such that the data drift of the intensity that has been estimated by the intensity estimation unit 12 is added to the original image data.

The update unit 13 performs the following process in the learning phase. The update unit 13 acquires the pre-data drift teacher image 111 and the post-data drift teacher image 112 after the intensity purpose update unit 15 has updated the learning device 10 and the intensity adjustment learning device 14. In addition, the update unit 13 acquires the post-data drift image that has been generated from the pre-data drift teacher image 111 and that has been output from the learning device 10 in which an update of the parameter in which the error between the reference intensity value and the comparative intensity value is minimized has been performed by the intensity purpose update unit 15.

Then, the update unit 13 uses the pre-data drift teacher image 111, the post-data drift teacher image 112 and the post-data drift image, and updates the parameter of each of the learning device 10 and the intensity adjustment learning device 14 to minimize a general loss function related to image generation. The update unit 13 is able to minimize the loss function by using, for example, an L1 norm between images, an adversarial loss function, or the like.

The learning device 10 includes a machine learning model that generates the post-data drift image by adding the data drift of a predetermined intensity to the input image data, and outputs the generated post-data drift image. This machine learning model is able to use, for example, a U-Net that is a network that performs segmentation of an image. The learning device 10 inputs the image data that has been input to the machine learning model that is included in the learning device 10 by itself in both of the learning phase and the estimation phase, and acquires the data drift image that has been generated from the image conversion.

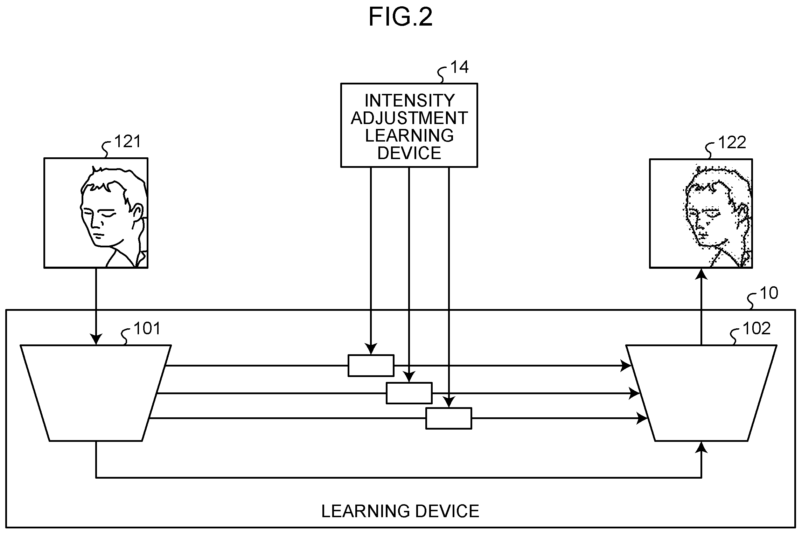

The machine learning model included in the learning device 10 receives an adjustment that is performed by the intensity adjustment learning device 14 such that image conversion in which the data drift of the intensity corresponding to the designated intensity value is added to the image data. FIG. 2 is a diagram illustrating an outline of the image conversion performed on the basis of the machine learning model included in the learning device. In FIG. 2, a case in which the U-Net is used as the machine learning model is illustrated. In a case of the U-Net, the machine learning model includes, as illustrated in FIG. 2, an encoder 101 and a decoder 102. Moreover, the encoder 101 and the decoder 102 are connected by a plurality of networks each having a different depth.

For example, in a case where the predetermined intensity value has been designated as the intensity value of the data drift, the intensity adjustment learning device 14 adjusts each of the depths of the networks such that the data drift of the predetermined intensity with respect to the predetermined intensity value is added to the original image data. The learning device 10 processes image data 121 that has been input by using the encoder 101, performs, for each network, a process for adding the data drift of the predetermined intensity, processes data for each network by using the decoder 102, and generates the image data in which the data drift of the predetermined intensity has been added. As a result of this, the learning device 10 performs the image conversion on the image data 121, and generates image data 122 in which the data drift of the predetermined intensity has been added.

A description will be given here by referring back to FIG. 1. The learning device 10 performs the following process in the learning phase. The learning device 10 receives the adjustment in accordance with the reference intensity value of the intensity of the data drift that is to be added to the input data with respect to the machine learning model that is held by the learning device 10 by itself from the intensity adjustment learning device 14. Then, the learning device 10 acquires the pre-data drift teacher image 111 from the teacher data storage unit 11. Then, the learning device 10 inputs the acquired pre-data drift teacher image 111 to the machine learning model, and acquires the post-data drift image in which that is obtained by adding the data drift that corresponds to the adjustment that has been received from the intensity adjustment learning device 14 and that is in accordance with the reference intensity value to the image data. Then, the learning device 10 outputs the data drift image in which the data drift has been added to the pre-data drift teacher image 111 to the intensity estimation unit 12.

After that, the learning device 10 receives an update of the parameter that minimizes the error between the reference intensity value and the comparative intensity value from the intensity purpose update unit 15. In addition, the learning device 10 receives an update of the parameter that minimizes the general loss function related to generate an image from the update unit 13. As a result of this, the learning device 10 completes the learning that is performed in order to generate the post-data drift image in which the data drift of the designated intensity value has been added to the input image.

Furthermore, the learning device 10 performs the following process in the estimation phase. The learning device 10 receives an input of the image data that is the base of the generation of the post-data drift image from the user terminal 2. Then, the learning device 10 inputs the acquired image data to the machine learning model that has been adjusted by the intensity adjustment learning device 14 so as to add the data drift of the intensity value designated by the user. Then, the learning device 10 acquires the post-data drift image in which the data drift of the intensity corresponding to the intensity value that has been designated by the user has been added to the acquired image data from the machine learning model. After that, the learning device 10 transmits the acquired data drift image to the user terminal 2.

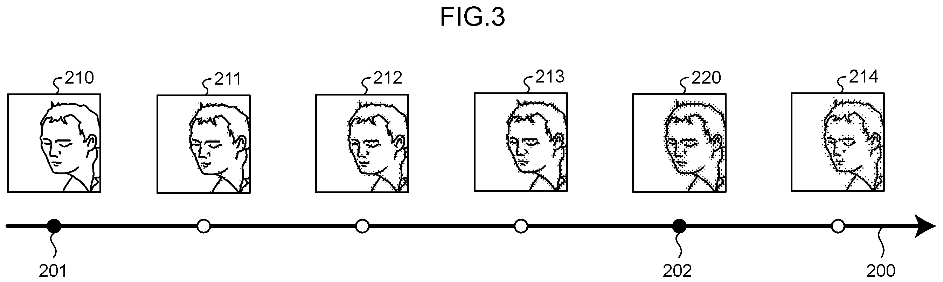

FIG. 3 is a diagram illustrating a process of generating the post-data drift image performed by the machine learning device according to the embodiment. In the following, a process of generating the post-data drift image according to the intensity performed by the machine learning device 1 will be described with reference to FIG. 3. An arrow 200 illustrated in FIG. 3 represents a transition of the intensity value of the data drift, and indicates that the intensity value increases as the arrow 200 moves toward the right in the plane of the drawing.

For example, a description will be given by using a case in which each of an intensity 201 of an image 210 that is the original image and an intensity value 202 of the predetermined data drift to be added to the image 210 has been determined as the intensity value of the data drift. In a case where an image after data drift is generated by using labelling between an intensity value and an image, an image 220 that has the label of the intensity value 202 is generated as the image in which the data drift of the intensity corresponding to the intensity value 202 is added to the image 210. However, a label of the other intensity value is not held in this case, so that it is difficult to generate an image in which the data drift of the intensity corresponding to the other intensity value is added to the image 210.

On the other hand, in the machine learning device 1 according to the present embodiment, the intensity value of the data drift that is added to the image data by the learning device 10 caused by the intensity adjustment learning device 14 in accordance with the designated intensity value, without using a label of the intensity value of the data drift with respect to the image. As a result of this, the learning device 10 is able to generate images 211 to 213 in each of which the data drift of the intensity corresponding to the intensity value of the images disposed between the images 211 and 213, in addition to the image 210 and 220 illustrated in FIG. 3. Furthermore, the learning device 10 is also able to generate an image 214 in which the intensity value of the data drift is greater than that of the image 220, in addition to the intensity of the images between the images 210 and 220.

In this way, the machine learning device 1 is able to complement the images by continuously generating the image after data drift in accordance with the intensity value that is other than the already known intensity value. In other words, the machine learning device 1 is able to generate the image in which the data drift of the intensity corresponding to the intensity value that is not present in the data set, which makes it possible to appropriately perform a retraining in order to verify the equitability or guarantee the equitability of the AI by using these images.

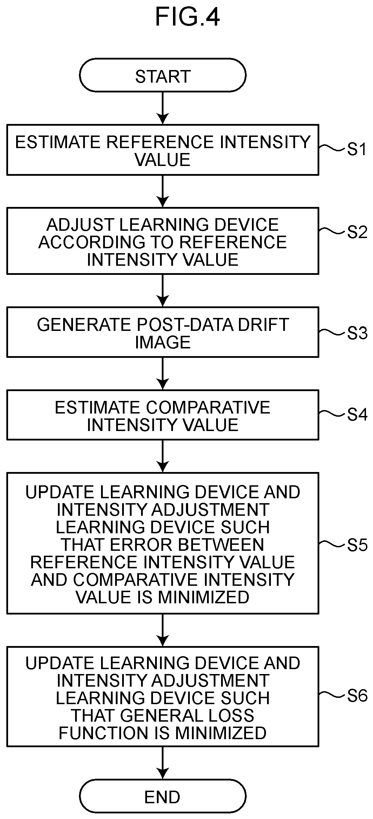

FIG. 4 is a flowchart illustrating the flow of a machine learning process performed for the image conversion that is performed in the machine learning device according to the embodiment. In the following, the flow of the machine learning process performed for the image conversion in which the data drift of a desired intensity performed in the machine learning device 1 will be explained with reference to FIG. 4.

The intensity estimation unit 12 acquires the post-data drift teacher image 112 from the teacher data storage unit 11. Then, the intensity estimation unit 12 obtains the degree of confidence by inputting the post-data drift teacher image 112 to the class identification device. Then, the intensity estimation unit 12 estimates the entropy that is related to the post-data drift teacher image 112 and that is the reference intensity from the degree of confidence (Step S1).

Then, the intensity adjustment learning device 14 adjusts the learning device 10 in accordance with the reference intensity value (Step S2).

Then, the learning device 10 acquires the pre-data drift teacher image 111 from the teacher data storage unit 11. Then, the learning device 10 performs the image conversion in which the data drift of the intensity corresponding to the reference intensity value is added to the pre-data drift teacher image 111, and generates the post-data drift image (Step S3).

The intensity estimation unit 12 acquires the post-data drift image from the learning device 10. Then, the intensity estimation unit 12 obtains the degree of confidence by inputting the post-data drift image to the class identification device. Then, the intensity estimation unit 12 estimates the entropy that is related to the post-data drift image and that corresponds to the comparative intensity value from the degree of confidence (Step S4).

Then, the intensity purpose update unit 15 updates the parameter for the learning device 10 and the intensity adjustment learning device 14 so as to minimize the error between the reference intensity value and the comparative intensity value (Step S5).

After that, the update unit 13 updates the parameter for the learning device 10 and the intensity adjustment learning device 14 so as to minimize the general loss function on the basis of the pre-data drift teacher image 111, the post-data drift teacher image 112, and the post-data drift image (Step S6).

In the following, a result of image identification obtained by the class classifier performing a training by using the post-data drift image in which the complement has been performed by the machine learning device 1 according to the embodiment will be explained. Here, verification has been performed by using a public data set. The public data set that has been used is CelebA. Furthermore, a target task is a task of classifying a face image into four classes of a man, a woman, a smiling face, without a smiling face. Furthermore, the number of pieces of training data is 9460, and the number of pieces of verification data is 4056. The accuracy of each of the classes has been verified by using the verification data in which the intensity of the data drift has been changed by targeting the classifier in which the training data has been trained.

The post-data drift image in which the data drift of an arbitrary intensity value is added is generated by the machine learning device 1. For example, in a case where the data drift of the predetermined intensity value has already been known, the machine learning device 1 is able to generate the post-data drift image in which the data drift of the intensity corresponding to the predetermined intensity value has been added. In addition, the machine learning device 1 is able to generate the post-data drift image in which the data drift of the intensity corresponding to the intensity value that is smaller than the predetermined intensity value has been added. Furthermore, the machine learning device 1 is able to generate the post-data drift image in which the data drift of the intensity corresponding to the intensity value that is larger than the predetermined intensity value has been added. In other words, the machine learning device 1 is able to create a variable corresponding to the intensity value that has been designated about the learning device 10. As a result of this, the complement image that has been generated by adding the data drift of the intensity corresponding to the intensity value that is other than the already known intensity value by the machine learning device 1 also has a meaning that is in accordance with the intensity of the data drift, and also, becomes the image that is able to be used for a retraining.

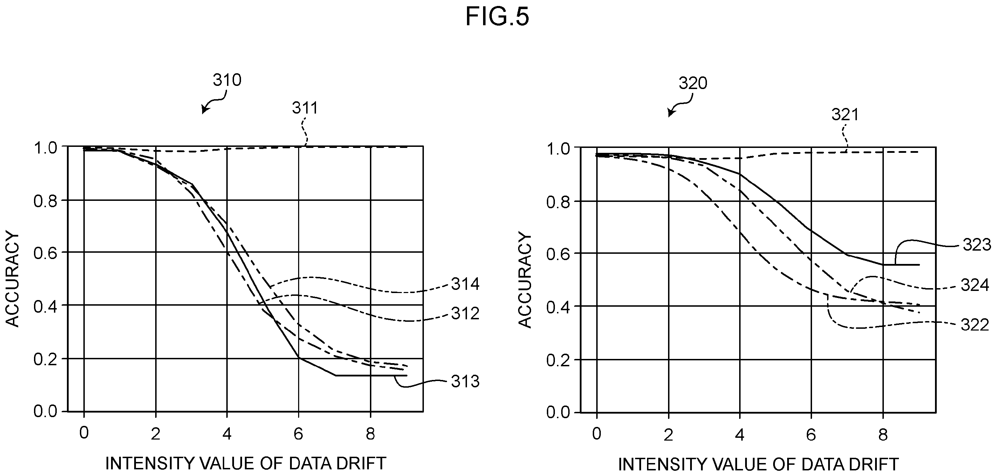

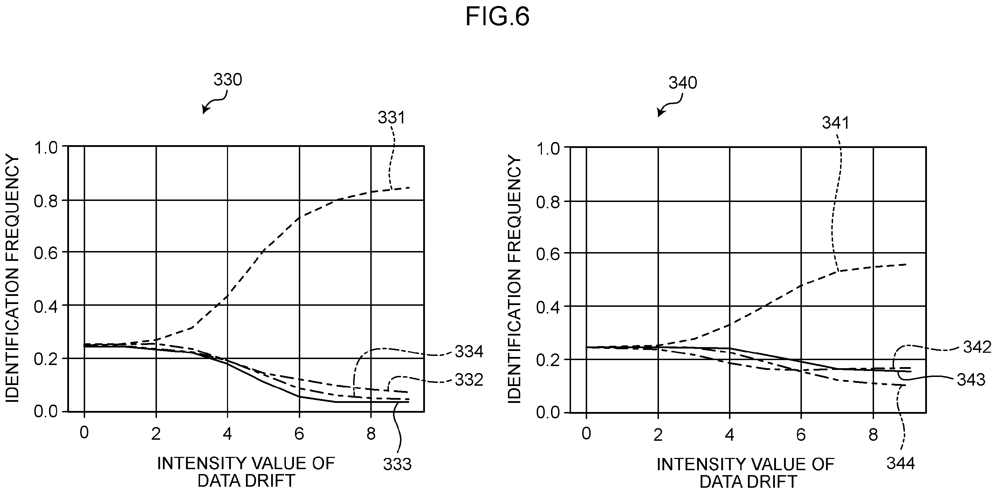

FIG. 5 is a diagram illustrating a comparison of validity accuracy of the class classification. FIG. 6 is a diagram illustrating an identification frequency of the class classification. Here, a result of the class classification performed by using the post-data drift image that has been complemented by the machine learning device 1 according to the embodiment will be described with reference to FIGS. 5 and 6.

A graph 310 illustrated in FIG. 5 is a graph that indicates the accuracy of the class classification indicated in a case where a training has been performed without using the complemented image data. The graph 310 indicates the intensity value of the data drift by the horizontal axis, and indicates the estimation accuracy of the class classification by the vertical axis. In addition, a curve 311 represents a classification result of a woman without a smiling face, a curve 312 represents a classification result of a man without a smiling face, a curve 313 represents a classification result of a woman with a smiling face, and a curve 314 represents a classification result of a man with a smiling face.

As indicated by the graph 310, in a case where the complemented image data is not used, a deviation of the accuracy between the curve 311 and the curves 312 to 314 increases as the intensity value of the data drift increases. In other words, the estimation accuracy related to the woman without a smiling face is significantly high, and degradation of the equitability is large.

On the other hand, a graph 320 illustrated in FIG. 5 is a graph that indicates the accuracy of the class classification indicated in a case where a training has been performed by using the image data that has been complemented by the machine learning device 1. The graph 320 indicates the intensity value of the data drift by the horizontal axis, and indicates the estimation accuracy of the class classification by the vertical axis. In addition, a curve 321 represents a classification result of a woman without a smiling face, a curve 322 represents a classification result of a man without a smiling face, a curve 323 represents a classification result of a woman with a smiling face, and a curve 324 represents a classification result of a man with a smiling face.

As indicated by the graph 320, in also a case in which the image data that has been complemented by the machine learning device 1 is used, a deviation of the accuracy between the curve 321 and the curves 322 to 324 increases as the intensity value of the data drift increases. However, as compared with the graph 310, it is possible to suppress the deviation. In other words, in a case where the complemented image data is used, the estimation accuracy related to the woman without a smiling face is higher than the others, but the deviation of the estimation accuracy is suppressed as compared with a case in which the complemented image data is not used, and thus, the degradation of the equitability is reduced.

Furthermore, a graph 330 illustrated in FIG. 6 is a graph that indicates the identification frequency obtained on the basis of the class classification in a case where a training has been without using the complemented image data. The graph 330 indicates the intensity value of the data drift by the horizontal axis, and indicates the identification frequency of the class classification by the vertical axis. In addition, a curve 331 represents an identification frequency of a woman without a smiling face, a curve 332 represents an identification frequency of a man without a smiling face, a curve 333 represents an identification frequency of a woman with a smiling face, and a curve 334 represents an identification frequency of a man with a smiling face.

As indicated by the graph 330, in a case where the complemented image data is not used, a bias of the identification frequency between the curve 331 and the curves 332 to 334 increases as the intensity value of the data drift increases. In other words, the estimated frequency of a woman without a smiling face is significantly higher than the others, and thus, the degradation of the equitability is large.

On the other hand, a graph 340 illustrated in FIG. 6 is a graph that indicates the identification frequency obtained on the basis of the class classification obtained in a case where the image data that has been complemented by the machine learning device 1 is used. A graph 340 indicates the intensity value of the data drift by the horizontal axis, and indicates the identification frequency of the class classification by the vertical axis. Then, a curve 341 represents an identification frequency of a woman without a smiling face, a curve 342 represents an identification frequency of a man without a smiling face, a curve 343 represents an identification frequency of a woman with a smiling face, and a curve 344 represents an identification frequency of a man with a smiling face.

As indicated by the graph 320, in also a case in which the image data that has been complemented by the machine learning device 1, a bias of the identification frequency between the curve 341 and the curves 342 to 344 increases as the intensity value of the data drift increases. However, as compared with the graph 330, it is possible to suppress the bias. In other words, in a case where the complemented image data is used, the frequency that it is determined to be a woman without a smiling face is higher than the others, but the bias of the frequency is suppressed as compared with a case in which the complemented image data is not used, and thus, the degradation of the equitability is reduced.

As described above, the machine learning device according to the present embodiment estimates, from the given post-data drift teacher image, the reference intensity value of the data drift of the given post-data drift teacher image, and updates the adjustment learning device and the learning device on the basis of the estimated reference intensity value. Then, the machine learning device generates the post-data drift image in which the data drift of the intensity corresponding to the reference intensity value has been added to the pre-data drift teacher image that is given by using the updated adjustment learning device and the updated learning device. Then, the machine learning device updates the adjustment learning device and the learning device by comparing the comparative intensity value that is the intensity value of the data drift of the generated post-data drift image with the reference intensity value.

By using the adjustment learning device and the learning device that have been trained in this manner, it is possible to generate an image in which the data drift of the intensity corresponding to various kinds of intensity values, which makes it possible to generate continuous images corresponding to the data drift in which the intensity value is continuously changed. Furthermore, it is possible to allow each of the post-data drift images that have been generated by adding the data drift of the intensity corresponding to the respective intensity values to have a meaning as the image corresponding to the intensity value. Then, by training the machine learning model that performs estimation by using the data drift image that has been generated by using the adjustment learning device and the learning device included by the machine learning device according to the present embodiment, it is possible to guarantee the equitability of the estimation, which makes it possible to reduce the degradation of the intensity estimation accuracy of the data drift.

### (Hardware configuration)

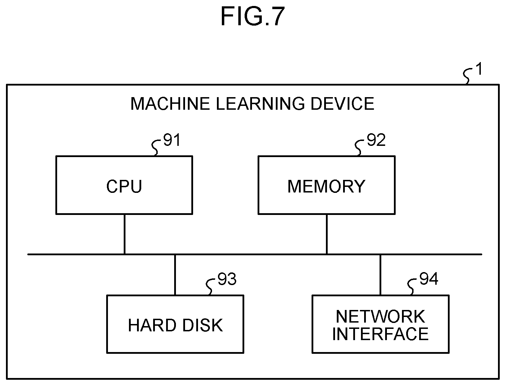

FIG. 7 is a diagram of a hardware configuration of the machine learning device. Next, one example of a hardware configuration for implementing each of the functions of the machine learning device 1 will be described with reference to FIG. 7.

As illustrated in FIG. 7, the machine learning device 1 includes, for example, a central processing unit (CPU) 91, a memory 92, a hard disk 93, and a network interface 94. The CPU 91 is connected to the memory 92, the hard disk 93, and the network interface 94 via a bus.

The network interface 94 is an interface for communication between the machine learning device 1 and an external device. The network interface 94 relays communication between, for example, the user terminal 2 and the CPU 91.

The hard disk 93 is an auxiliary storage device. The hard disk 93 implements the function of the teacher data storage unit 11 illustrated in FIG. 1 as an example. Furthermore, the hard disk 93 stores therein various kinds of programs including a program for implementing the function of the learning device 10, the intensity estimation unit 12, the update unit 13, the intensity adjustment learning device 14, the and the intensity purpose update unit 15 illustrated in FIG. 1 as an example.

The memory 92 is a main storage device. For example, a dynamic random access memory (DRAM) may be used for the memory 92.

The CPU 91 reads out the various kinds of programs from the hard disk 93, loads the read programs into the memory 92, and executes the programs. As a result of this, the CPU 91 implements the function of the learning device 10, the intensity estimation unit 12, the update unit 13, the intensity adjustment learning device 14, and the intensity purpose update unit 15 illustrated in FIG. 1 as an example.

### Reference Signs List

- 1: machine learning device
- 2: user terminal
- 10: learning device
- 11: teacher data storage unit
- 12: intensity estimation unit
- 13: update unit
- 14: intensity adjustment learning device
- 15: intensity purpose update unit
- 111: pre-data drift teacher image
- 112: post-data drift teacher image

## Claims

1. A machine learning program that causes a computer to execute a process comprising:
estimating a first intensity estimation value that indicates an intensity of a data change in data after change by using intensity estimation AI (12);
performing a first update, by using an intensity adjustment learning device, on a learning device such that the data change of the intensity indicated by the first intensity estimation value is added to data before change;
generating post-change data by adding the data change to the data before change by using the learning device that has been subjected to the first update;
estimating a second intensity estimation value that indicates the intensity of the data change in the post-change data by using the intensity estimation AI; and
comparing the first intensity estimation value with the second intensity estimation value, and causing the intensity adjustment learning device to perform first learning such that the second intensity estimation value approaches the first intensity estimation value.

2. The machine learning program according to claim 1, further comprising causing the learning device to perform second learning such that a loss function is minimized based on the data before change, the data after change, and the post-change data.

3. The machine learning program according to claim 2, further comprising
performing a second update, in response to an input of each of input data and a predetermined intensity value, by using the intensity adjustment learning device in which the first learning has been completed, the learning device such that a change in intensity indicated by the input predetermined intensity value to the input data, and
generating, by using the learning device that has been subjected to the second learning and that has also been subjected to the second update, predetermined intensity change data in which the change in intensity indicated by the predetermined intensity value has been added to the input data.

4. The machine learning program according to claim 3, wherein
the inputting the predetermined intensity value includes inputting the predetermined intensity value that includes one or a plurality of individual intensity values from among continuous intensity values,
the performing the second update includes performing the second update on the learning device such that the change in intensity indicated by the individual intensity value is added to the input data for each of the individual intensity values, and
the generating the predetermined intensity change data includes generating individual change data in which the change in intensity indicated by the individual intensity value has been added to the input data by using the learning device for each of the individual intensity values and generating one or the plurality of pieces of individual change data.

5. A machine learning method that causes a machine learning device to execute a process comprising:
estimating a first intensity estimation value that indicates an intensity of a data change in data after change by using intensity estimation AI;
performing a first update, by using an intensity adjustment learning device, on a learning device such that the data change of the intensity indicated by the first intensity estimation value is added to data before change;
generating post-change data by adding the data change to the data before change by using the learning device that has been subjected to the first update;
estimating a second intensity estimation value that indicates the intensity of the data change in the post-change data by using the intensity estimation AI; and
comparing the first intensity estimation value with the second intensity estimation value, and causing the intensity adjustment learning device to perform first learning such that the second intensity estimation value approaches the first intensity estimation value.

6. A machine learning device comprising:
a learning device that generates new data by adding a predetermined data change to input data;
an intensity estimation unit configured to
perform intensity estimation AI estimation on a first intensity estimation value that indicates an intensity of a data change in data that has been subjected to data conversion, and
estimate a second intensity estimation value that indicates the intensity of the data change in post-change data that has been generated by inputting data before change to the learning device in which a first update has been performed based on the first intensity estimation value;
an intensity adjustment learning device configured to perform the first update on the learning device such that the data change in the intensity indicated by the first intensity estimation value is added as the predetermined data change; and
an intensity purpose update unit configured to compare the first intensity estimation value with the second intensity estimation value, and cause the intensity adjustment learning device to perform first learning such that the second intensity estimation value approaches the first intensity estimation value.
